Europäisches Patentamt

European Patent Office

Office européen des brevets

(19)

(11) Veröffentlichungsnummer: **0 045 735**
**A2**

(12) ## EUROPÄISCHE PATENTANMELDUNG

(21) Anmeldenummer: 81890119.1

(22) Anmeldetag: 16.07.81

(51) Int. Cl.³: **B 01 D 11/04**

(30) Priorität: 31.07.80 AT 3969/80

(43) Veröffentlichungstag der Anmeldung:
10.02.82 Patentblatt 82/6

(84) Benannte Vertragsstaaten:
BE DE FR GB IT SE

(71) Anmelder: Andritz Ruthner Industrieanlagen
Aktiengesellschaft
Aichholzgasse 51-53
A-1121 Wien(AT)

(72) Erfinder: Samhaber, Friedrich, Dipl.-Ing. Dr.
Schieferhub 5
A-4722 Peuerbach(AT)

(74) Vertreter: Köhler-Pavlik, Johann, Dipl.-Ing.
Margaretenplatz 5
A-1050 Wien(AT)

(54) **Flüssig-Flüssig-Extraktion von wässerigen ionenhältigen Flüssigkeiten.**

(57) Die Verwendung von sauerstofffreien Halogenkohlenstoffverbindungen oder halogenierten Kohlenwasserstoffen mit mehr als 2 vorzugsweise mehr als 3 C-Atomen wie Fluorchlorkohlenwasserstoffen oder Fluorkohlenwasserstoffen und insbesondere von Hexachlorbutadien als unbrennbares Verdünnungsmittel für organische Verbindungen bei der Flüssig-Flüssig-Extraktion von wässerigen, ionenhältigen Lösungen.

EP 0 045 735 A2

Croydon Printing Company Ltd.

## Flüssig-Flüssig-Extraktion von wässerigen ionenhältigen Flüssigkeiten

Zum Entfernen von Ionen und bzw. oder freien Säuren aus wässerigen Lösungen werden in zunehmenden Maße organische, beschränkt wasserlösliche Flüssigkeiten verwendet, welche als Komplexbildner, Chelatbildner, Adduktbildner oder flüssige Ionentauscher wirken. Um diese organischen Flüssigkeiten als Extraktionsmittel verwenden zu können, werden sie in einem geeigneten Verdünnungsmittel gelöst.

An diese Verdünnungsmittel werden nun besondere Anforderungen gestellt: sie sollen möglichst unlöslich in der wässerigen Lösung, aber vollständig löslich in der organischen Phase sein, sie sollen eine besonders hohe Lösekraft für das allenfalls gebildete Addukt bzw. den organischen Komplex haben, sollen eine von der wässerigen Lösung möglichst unterschiedliche Dichte aufweisen, sollen gegenüber den in der wässerigen Lösung befindlichen Agentien (z.B. aggressive Säuren) möglichst resistent und möglichst ungiftig sein.

Aus der Vielzahl der verfügbaren Verdünnungsmittel genügen nur ganz wenige allen diesen Anforderungen und es ist daher nicht verwunderlich, daß in technischem Maßstab für diesen Zweck fast ausschließlich ein einziges Verdünnungsmittel angewendet wird, nämlich die als Kerosin bezeichnete Kohlenwasserstoff-Fraktion des Siedebereichs 170-260°C, Kerosin hat jedoch für den großtechnischen Einsatz den Nachteil der leichten Entflammbarkeit.

Mit Kerosin oder ähnlichen brennbaren Flüssigkeiten als Lösungsmittel bzw. Verdünnungsmittel betriebene Flüssig-Flüssig-Extraktionsanlagen müssen in feuersicheren Räumen errichtet und mit explosionsgeschützten Anlagenteilen (Motoren, Armaturen, Instrumenten, etc.) ausgestattet sein und erfordern besondere Vorsicht und Sorgfalt in der Bedienung und Wartung. Weiters hat Kerosin den Nachteil, für manche Anionentauscher in beladenem Zustand eine zu geringe Löslichkeit zu haben, so daß es zur Ausbildung einer dritten Phase kommt.

Die Suche nach einem feuersicheren, unbrennbaren Lösungsmittel lag wegen des großen Nachteils der Feuergefährlichkeit des Kerosins nahe. So wurde z.B. der unbrennbare Tetrachlorkohlenstoff als Ersatz für Kerosin für diese Anwendungszwecke vorgeschlagen. Die große Giftigkeit des Tetrachlorkohlenstoffs neben seiner nicht vernachlässigbaren Wasserlöslichkeit stellt einen so schwerwiegenden Nachteil gegenüber dem Kerosin dar, daß es dieses nicht verdrängen konnte und seine Anwendung in technischem Ausmaß sehr beschränkt blieb.

Trotz intensiver Suche nach einem feuersicheren, unbrennbaren Verdünnungsmittel für die vorgenannten organischen Verbindungen ist es bisher nicht gelungen, ein Verdünnungsmittel zu finden, das die übrigen ausgezeichneten Eigenschaften des Kerosins aufweist, geringere Löslichkeit in Wasser hat und darüber hinaus noch unbrennbar ist und ein besseres Lösevermögen für beladene Anionentauscher aufweist.

Es wurde nun gefunden, daß Halogenkohlenstoffverbindungen oder halogenierte Kohlenwasserstoffe mit mehr als 2 C-Atomen wie z.B. Fluorchlorkohlenwasserstoffe oder Fluorkohlenwasserstoffe und insbesondere Hexachlorbutadien als unbrennbares Verdünnungsmittel für organische Komplexbildner, Chelatbildner, Adduktbildner oder flüssige Ionentauscher praktische ebensogute Eignung besitzen wie Kerosin, darüber hinaus aber den Vorteil der Unbrennbarkeit und besonders geringeren Löslichkeit in Wasser – bei wesentlich höherem Lösevermögen für beladene Anionentauscher – aufweist.

So beträgt z.B. die Löslichkeit von Hexachlorbutadien in Wasser (bei 20° C) 4 ppm, die Löslichkeit von Wasser in Hexachlorbutadien (bei 20° C) 10 ppm. Diese geringe Wasserlöslichkeit, welche entscheidend ist für eine minimale Austragung von organische Lösungsmitteln mit dem wässerigen Extrakt und damit für geringe Stoffverluste und eine geringe Abwasserbelastung, wird weder von Kerosin noch kaum einem anderen vergleichbaren Lösungsmittel erreicht.

Das bevorzugt verwendete Hexachlorbutadien ist nicht nur selbst unbrennbar, sondern es bleibt auch unbrennbar, wenn an sich brennbare Substanzen darin gelöst werden, sofern der Anteil der brennbaren Substanzen ein gewisses Maß nicht überschreitet.

Erfindungsgemäß werden somit organische Verbindungen, welche als Komplex-, Chelat- oder Adduktbildner bzw. flüssige Ionentauscher fungieren, vor ihrer Anwendung als Extraktionsmittel bei der Flüssig-Flüssig-Extraktion von wässerigen, ionenhältigen Lösungen mit den umseitig genannten halogenierten Kohlenwasserstoffen verdünnt.

Die oben erwähnten organischen Verbindungen, welche vor Ihrer Anwendung als Extraktionsmittel bei der Flüssig-Flüssig-Extraktion mit den oben angeführten Verdünnungsmitteln verdünnt werden, können im wesentlichen in 4 Gruppen eingeteilt werden:

1. Komplexbildner: Als solche werden meist Derivate der Phosphorsäure, z.B. Phosphorsäurealkylester (Tributylphosphat, Di-2-äthylhexylphosphorsäure) oder Trialkylphosphine verwendet (Tri-n-octylphosphinoxyd).

2. Chelatbildner: Hiebei handelt es sich vorwiegend um Oxime oder Chinoline (gebräuchlichste Typenbezeichnungen der Fa.General Mills Chemicals Inc., Minneapolis LIX 64N, LIX 63, LIX 65N, LIX 70, LIX 54, LIX 34)

3. Flüssige Kationentauscher: Als solche werden spezielle organische Säuren z.B. Fettsäuren, oder Alkylderivate besonders der Phosphor- oder Schwefelsäure eingesetzt.

4. Flüssige Anionentauscher
Als solche werden primäre, sekundäre (z.B. Amberlite LA-1 und LA-2 der Fa.Rohm & Haas) und tertiäre Amine (z.B. Alamine 336 von General Mills) und quaternäre Ammoniumsalze, (z.B. Tricaprylmethylammoniumchlorid mit Handelsnamen Aliquat 336 der Fa.General Mills) verwendet.

## Ausführungsbeispiele

Beispiel 1

In einem 5 l fassenden, mit PVDF ausgekleidetem Gefäß wird eine Lösung von 960 ml DEHP (Di-2-äthylhexylphosphorsäure) in 1440 ml Hexachlorbutadien hergestellt. Diese Lösung wird mit 1200 ml einer wässerigen Lösung mit einem Gehalt von 40,5 g/l $Fe^{3+}$, 65 g/l $F^-$ und 153,5 g/l $NO_3^-$ überschichtet und sodann beide Lösungen mit einem intensiv wirkenden Propellerrührer mit 300 U/min 25 Minuten lang gerührt und innig vermischt.

Anschließend wartet man, bis sich die wässerige Phase von der schwereren organischen Phase (D = 1,35) abgetrennt hat und analysiert die wässerige Lösung. Die Analyse ergibt einen Gehalt von 15,9 g/l $Fe^{3+}$, 54 g/l $F^-$ und 153 g/l $NO_3^-$ und zeigt, daß über 60 % der $Fe^{3+}$-Ionen aus der wässerigen Lösung in die organische Phase übergegangen sind.

Beispiel 2

Es wird analog wie in Beispiel 1 angegeben gearbeitet und eine Lösung von 50 Vol.% Tributylphosphat und 50 Vol.% Hexachlorbutadien hergestellt. Diese Lösung wird zur Extraktion der gleichen Menge einer wässerigen Lösung von 44,2 g/l $Fe^{3+}$, 56,3 g/l ΣHF und 163,8 g/l $HNO_3$ verwendet und 10 Minuten lang intensiv gerührt. Die anschließend an die Trennung der Phasen vorgenommene Analyse ergibt, daß 9,5 % der Fluorionen aus der wässerigen Phase in die organische Phase übergangen sind.

0045735

Beispiel 3

40 ml einer Lösung von 14,85 g/l $Ni^{2+}$ (als Sulfat eingewogen) und 25 g/l $NH_3$ (gesamt) werden mit 100 ml einer Lösung von 25 Vol.% LIX 64N in Hexachlorbutadien 3 Minuten lang mit einem intensiv wirkenden Propellerrührer mit 300 U/min innig vermischt.

Unter gleichen Bedingungen werden parallel dazu 40 ml derselben Nickelsulfatlösung mit 100 ml einer Lösung von 25 Vol.% LIX 64N in Kerosin extrahiert.

Nach der Trennung der Phasen, welche sich bei der Hexachlorbutadienlösung besser gestaltet als bei der Kerosinlösung, wird die Restkonzentration an Ni in den jeweiligen wässerigen Phasen bestimmt.

Bei Verwendung von Hexachlorbutadien als Verdünnungsmittel verbleibt eine Restkonzentration von 0,43 g/l $Ni^{2+}$, was einem Extraktionswirkungsgrad von 97,10 % entspricht. Bei Verwendung von Kerosin als Verdünnungsmittel verbleibt eine Restkonzentration von 0,44 g/l $Ni^{2+}$, was einem Extraktionswirkungsgrad von 97,04 % entspricht.

Patentanspruch

Die Verwendung von sauerstofffreien Halogenkohlenstoffverbindungen oder halogenierten Kohlenwasserstoffen mit mehr als 2 vorzugsweise mehr als 3 C-Atomen wie Fluorchlorkohlenwasserstoffen oder Fluorkohlenwasserstoffen und insbesondere von Hexachlorbutadien als unbrennbares Verdünnungsmittel für organische Verbindungen bei der Flüssig-Flüssig-Extraktion von wässerigen, ionenhältigen Lösungen.